# EUROPÄISCHE PATENTSCHRIFT

(11) **EP 1 352 293 B1**
(45) Veröffentlichungstag und Bekanntmachung des Hinweises auf die Patenterteilung: **09.08.2006**
(21) Anmeldenummer: 02715963.1
(22) Anmeldetag: 17.01.2002
(51) Int. Cl.: G03B 21/62

(54) **PROJEKTIONSSCHIRM AUS EINEM VERBUNDGLAS**
PROJECTOR SCREEN MADE FROM A COMPOSITE GLASS
ECRAN DE PROJECTION CONSTITUE D'UN VERRE FEUILLETE

(30) Priorität: 18.01.2001 AT 832001
(43) Veröffentlichungstag der Anmeldung: 15.10.2003
(73) Patentinhaber: SAINT-GOBAIN GLASS FRANCE, 92400 Courbevoie (FR)
(72) Erfinder: ECKELT, Christian, A-4400 Steyr (AT); DIRISAMER, Wolfgang, A-4040 Linz (AT)
(74) Vertreter: Muller, René
(86) Internationale Anmeldenummer: PCT/AT2002/000019
(87) Internationale Veröffentlichungsnummer: WO 2002/057850

(56) Entgegenhaltungen:
- DE-U- 20 012 471
- US-A- 2 180 113
- US-A- 3 779 630
- US-A- 3 846 011

## Beschreibung

### Technisches Gebiet

Die Erfindung bezieht sich auf einen Projektionsschirm aus einem Verbundglas, das wenigstens zwei miteinander über eine Kunststoffschicht verbundene Glasscheiben aufweist.

### Stand der Technik

Derartige Projektionsschirme, insbesondere Rückprojektionsschirme, bei denen optische Signale auf die von einem Betrachter abgewandte Seite des Projektionsschirmes projiziert wird und auf denen Bilder derart abgebildet werden, daß sie der Betrachter auf der ihm zugewandten Seite des Projektionsschirms sehen kann, werden im wesentlichen für Präsentationen, zur Wiedergabe von Kinofilmen, für Femseher u. dgl. eingesetzt. Dabei sind beispielsweise mit einer Vielzahl an Linsen bestückte Folien zur Bilddarsteltung zwischen Glasscheiben angeordnet (US 4 219 253 A1). Das projizierte Bild kann dabei allerdings nur von einer Seite des Projektionsschirmes aus betrachtet werden. Weiters ist es bekannt, Bilder auf dünne durchscheinende Stoffbahnen oder auf transparentes Papier zu projizieren. Diese Projeküonsschirme können allerdings nicht ohne weiteres unter freiem Himmel eingesetzt werden, da sie vor Witterungseinflüssen geschützt werden müssen und besitzen meist eine mangelhafte Bildwiedergabefähigkeit.
DE 20012471 A offenbart einen Projektionsschirm gemäß dem Oberbegriff des Anspruchs 1.

### Darstellung der Erfindung

Der Erfindung liegt daher die Aufgabe zugrunde, einen Projektionsschirm der eingangs geschilderten Art anzugeben, der eine Betrachtung eines projizierten Bildes auf der dem Projektor abgewandten Seite des Projektionsschirms genauso gestattet, wie auf der dem Projektor zugewandten Seite. Zudem soll der efindungsgemäße Projektionsschirm nur einen geringen Funkeleffekt besitzen und keine Lichtflecken sowie Stellen mit übermäßigem Glanz aufweisen und bei geringen Herstellungskosten möglichst großen mechanischen Belastungen standhalten können.

Die Erfindung löst diese Aufgabe dadurch, daß eine der Glasscheiben auf ihrer Außenseite eine sich zumindest über den Projektionsbereich erstreckende transluzente keramische Beschichtung trägt und daß die andere Glasscheibe eine Spiegelungen unterbindende Oberflächenrauhigkeit besitzt.

Die transluzente keramische Beschichtung besitzt ein durchsichtiges, durchscheinendes Erscheinungsbild und soll verhindern, daß die von einem Projektor auf den Projektionsschirm geworfenen Lichtstrahlen an dieser Beschichtung reflektiert werden. Diese Beschichtung bewirkt zudem eine Bündelung der durch diese Schicht transmittierenden Projektionsstrahlen auf die Kunststoffschicht. Die Kunststoffschicht besteht beispielsweise aus einer matten, weißen transluzenten Kunststoffolie oder Kunstharzschicht, auf welcher das projizierte Bild abgebildet wird. Durch die matt weiße Ausgestaltung dieser Kunststoffschicht wird eine charakteristische Streuung und Teilreflexion der Lichtstrahlen und somit eine bestmögliche Bildwiedergabe erreicht. Zur Verhinderung von Stellen mit übermäßigem und somit störendem Glanz ist die Oberfläche der der Projektion abgewandten Glasscheibe mit einer definierten Oberflächenrauhigkeit versehen.

Als besonders vorteilhaft hat es sich erwiesen, wenn die Glasscheibe mit der transluzenten keramischen Beschichtung aus einem eisenoxidarmen Glas und die mit der Oberflächenrauhigkeit versehene Glasscheibe aus Silikatglas besteht. Das eisenoxidarme Glas unterstützt die filternde Wirkung der keramischen Beschichtung und das Silikatglas stellt eine bestmögliche Bildwiedergabe an der von der Projektionseinrichtung abgewandten Seite sicher. Gemäß der Erfindung sind somit mindestens zwei Glasscheiben mit einer Kunststoffschicht derart miteinander kombiniert, daß diese die Eigenschaft besitzen, auftreffendes Projektionslicht am Projektionsschirm darzustellen. Durch die besondere Kombination der Werkstoffe wird gleichzeitig erreicht, daß das projizierte Bild von beiden Seiten sichtbar wird. Anstatt der herkömmlichen Glasscheiben könnte allerdings auch Kunststoffglas, insbesondere Acrylglas verwendet werden. Der erfindungsgemäße Projektionsschirm kann besonders leicht in die Fassade eines Gebäudes integriert werden, wodurch sich beispielsweise effektvolle Werbeflächen gestalten lassen.

Um den Projektionsschirm besonders einfach und kostengünstig fertigen zu können, ist die Kunststoffschicht eine weiße, transluzente Polyvinylbutyralfolie. Diese Polyvinylbutyralfolie muß lediglich mit zwei Glasscheiben verklebt werden, um den gewünschten Effekt zu erreichen. Um die Streuung und Teilreflexion des projizierten Lichtes an der Polyvinylbutyralfolie sicherzustellen, enthält die Polyvinylbutyralfolie matte, weiße Kreidepigmente.

Eine gleichmäßige, definierte Schichtdicke der keramischen Beschichtung ergibt sich, wenn die transluzente keramische Beschichtung aus einer Siebdruckschicht besteht. Dadurch läßt sich die Beschichtung gleichmäßig und rasch auf eine Glasscheibe auftragen. Die Beschichtung besteht beispielsweise aus einem Lack aus Glaspulver mit Metalloxiden, welche bei vorzugsweise 600 bis 630 °C gebrannt wird, wodurch die Beschichtung mit der Glasscheibe einen festen Verbund eingeht. Mit Hilfe der Siebdruckbeschichtung läßt sich sicherstellen, daß die transluzente keramische Beschichtung eine Dicke von 5 bis 10 µm aufweist. Wäre die Schicht zu dick, würden die Projektionsstrahlen beim Transmittieren durch diese Schicht zu sehr abgeschwächt, und das zu projizierende Bild somit mit zu geringer Lichtintensität dargestellt und bei zu geringer Dicke der keramischen Beschichtung kann eine Reflexion der Projektionsstrahlen nicht vermieden werden.

Um einen störenden Glanz auf der der Projektion abgewandten Glasscheibe zu vermeiden, liegt die Rauhtiefe der mit der Oberflächenrauhigkeit versehenen Glasscheibe im Bereich von 2 bis 5 µm. Diese geforderte Rauhtiefe ergibt sich am besten durch ein Anätzen der Oberfläche der Glasscheibe. Störende Lichtreflexionen an der äußeren Oberfläche werden hiemit vermieden. Ist die Kunststoffschicht aus zwei Folien aufgebaut, nämlich einer transluzenten Polyvinylbutyralfolie und einer klaren Polyvinylbutyralfolie, so können die optischen Eigenschaften der keramischen Beschichtung und der Kunststoffschicht gut aufeinander abgestimmt werden.

Durch die Kombination der beiden Glasscheiben mit der dazwischen liegenden Kunststoffolie wird verhindert, daß bei Auf- und Durchlichtprojektion ein konzentrierter Lichtpunkt auf den Glasoberflächen entsteht, der ein klares Projektionsbild verhindert. Der von jedem Projektor erzeugte Lichtkegel, der auf der Glasoberfläche normalerweise als störender Lichtpunkt erscheint, wird von der keramischen Beschichtung derart gestreut, daß kein störender konzentrierter Lichtpunkt entsteht und das projizierte Bild somit klar erkennbar ist. Zudem wird das projizierte Bild nicht in seiner Farbe verfälscht sowie gleichmäßig scharf und verzerrungsfrei dargestellt. Durch die besondere Eigenschaft der Projektionsfläche wird das projizierte Bild auf der Vorderseite sowie auf der Rückseite sichtbar, wodurch der erfindungsgemäße Projektionsschirm genauso für Präsentationen in Vortragsräumen wie für Werbezwecke an Fassaden einsetzbar ist.

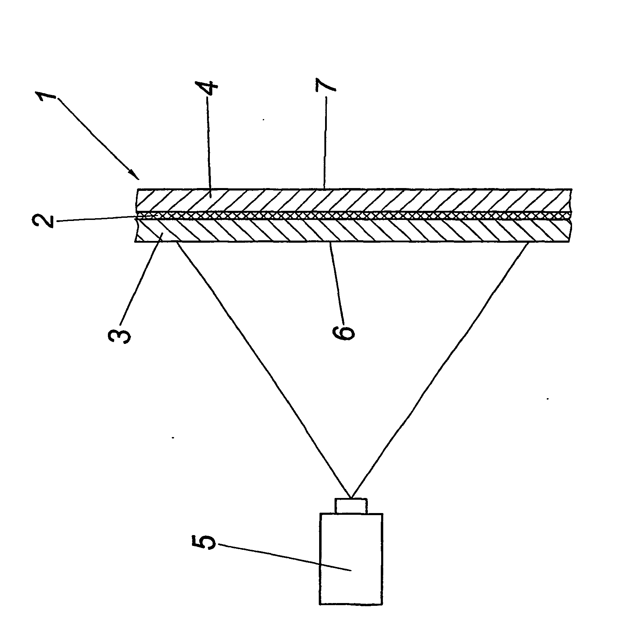

### Kurze Beschreibung der Zeichnung

In der Zeichnung ist ein erfindungsgemäßer Projektionsschirm rein schematisch in einer teilgeschnittenen Stimansicht dargestellt.

### Weg zur Ausführung der Erfindung

Ein Projektionsschirm 1 besteht aus zwei miteinander über eine Kunststoffschicht 2 verbundenen Glasscheiben 3, 4. Die einer Projektionseinrichtung 5 zugewandte Glasscheibe 3 trägt an ihrer Außenseite 6 eine sich zumindest über den Projektionsbereich erstreckende transluzente keramische Beschichtung und die der Projektionseinrichtung 5 abgewandte Glasscheibe 4 besitzt an ihrer Oberfläche 7 eine Spiegelungen unterbindende Oberflächenrauhigkeit. Die Glasscheibe 3 besteht aus einem eisenoxidarmen Glas und die Glasscheibe 4 aus Silikatglas. Die Kunststoffschicht 2 ist eine weiße, transluzente Polyvinylbutyralfolie.

## Patentansprüche

1. Projektionsschirm (1) aus einem Verbundglas, das wenigstens zwei miteinander über eine zur Kunststoffschicht Lichtstreuung (2) verbundene Glasscheiben (3, 4) aufweist, **dadurch gekennzeichnet daß** eine der Glasscheibe (3) auf ihrer Außenseite (6) eine sich zumindest über den Projektionsbereich erstreckende transluzente keramische Beschichtung trägt und daß die andere Glasscheibe (4) eine Spiegelungen unterbindende Oberflächenrauhigkeit besitzt.

2. Projektionsschirm nach Anspruch 1, **dadurch gekennzeichnet, daß** die Glasscheibe (3) mit der transluzenten keramischen Beschichtung aus einem eisenoxidarmen Glas besteht

3. Projektionsschirm nach einem der Ansprüche 1 oder 2, **dadurch gekennzeichnet, daß** die mit der Oberflächenrauhigkeit versehene Glasscheibe (4) aus Silikatglas besteht

4. Projektionsschirm nach einem der Ansprüche 1-3, **dadurch gekennzeichnet, daß** die Kunststoffschicht (2) eine weiße, transluzente Polyvinylbutyralfolie ist.

5. Projektionsschirm nach Anspruch 4, **dadurch gekennzeichnet, daß** die Polyvinylbutyralfolie matte, weiße Kreidepigmente enthält.

6. Projektionsschirm nach einem der Ansprüche 1-5, **dadurch gekennzeichnet, daß** die transluzente keramische Beschichtung aus einer Siebdruckschicht besteht.

7. Projektionsschirm nach einem der Ansprüche 1-6, **dadurch gekennzeichnet, daß** die transluzente keramische Beschichtung eine Dicke von 5 bis 10 µm aufweist.

8. Projektionsschirm nach einem der Ansprüche 1-7, **dadurch gekennzeichnet, daß** die Rauhtiefe mit der Oberflächenrauhigkeit versehenen Glasscheibe (4) im Bereich von 2 bis 5 µm liegt.

9. Projektionsschirm nach einem der Ansprüche 1-8, **dadurch gekennzeichnet, daß** die Kunststoffschicht (2) aus zwei Folien aufgebaut ist, nämlich einer transluzenten Polyvinylbutyralfolie und einer klaren Polyvinylbutyralfolie.

## Claims

1. A projection screen (1) made of a laminated glass which has at least two glass plates (3, 4) bonded to each other by means of a layer of plastic (2), **characterized in that** one of the glass plate (3) bears on its outer side (6) a translucent ceramic coating extending at least over the projection area and **in that** the other glass plate (4) has a surface roughness preventing reflections.

2. The projection screen as claimed in claim 1, **characterized in that** the glass plate (3) with the translucent ceramic coating consists of a glass that is low in iron oxide.

3. The projection screen as claimed in either of claims 1 and 2, **characterized in that** the glass plate (4) provided with the surface roughness consists of silicate glass.

4. The projection screen as claimed in one of claims 1-3, **characterized in that** the layer of plastic (2) is a white, translucent sheet of polyvinyl butyral.

5. The projection screen as claimed in claim 4, **characterized in that** the sheet of polyvinyl butyral contains matt, white chalk pigments.

6. The projection screen as claimed in one of claims 1-5, **characterized in that** the translucent ceramic coating comprises a screen-printed layer.

7. The projection screen as claimed in one of claims 1-6, **characterized in that** the translucent ceramic coating has a thickness of from 5 to 10 µm.

8. The projection screen as claimed in one of claims 1-7, **characterized in that** the peak-to-valley height the glass plate (4) provided with the surface roughness lies in the range from 2 to 5 µm.

9. The projection screen as claimed in one of claims 1-8, **characterized in that** the layer of plastic (2) is made up of two sheets, that is a translucent sheet of polyvinyl butyral and a clear sheet of polyvinyl butyral.

## Revendications

1. Écran de projection (1) réalisé dans un verre de sécurité feuilleté qui présente au moins deux plaques en verre (3, 4) reliées entre elles par le biais d'une couche de matière plastique (2) pour la diffusion, **caractérisé en ce que** l'une des plaques en verre (3) comporte sur son côté extérieur (6) un revêtement céramique translucide qui s'étend au moins sur la zone de projection et **en ce que** l'autre plaque en verre (4) possède une rugosité de surface qui empêche les réflexions.

2. Écran de projection selon la revendication 1, **caractérisé en ce que** la plaque en verre (3) munie du revêtement céramique translucide se compose d'un verre à faible teneur en oxyde de fer.

3. Écran de projection selon l'une des revendications 1 ou 2, **caractérisé en ce que** la plaque en verre (4) qui présente une rugosité de surface se compose de verre au silicate.

4. Écran de projection selon l'une des revendications 1 à 3, **caractérisé en ce que** la couche de matière plastique (2) est un film translucide blanc en polybutyrale de vinyle.

5. Écran de projection selon la revendication 4, **caractérisé en ce que** le film en polybutyrale de vinyle contient des pigments de craie blancs mats.

6. Écran de projection selon l'une des revendications 1 à 5, **caractérisé en ce que** le revêtement céramique translucide se compose d'une couche sérigraphiée.

7. Écran de projection selon l'une des revendications 1 à 6, **caractérisé en ce que** le revêtement céramique translucide présente une épaisseur comprise entre 5 et 10 µm.

8. Écran de projection selon l'une des revendications 1 à 7, **caractérisé en ce que** la profondeur de rugosité de la plaque en verre (4) qui présente une rugosité de surface est comprise entre 2 et 5 µm.

9. Écran de projection selon l'une des revendications 1 à 8, **caractérisé en ce que** la couche de matière plastique (2) est constituée de deux films, à savoir un film translucide en polybutyrale de vinyle et un film clair en polybutyrale de vinyle.
